# EUROPEAN PATENT APPLICATION

(11) **EP 1 936 845 A2**
(43) Date of publication of application: **25.06.2008**
(21) Application number: 07115548.5
(22) Date of filing: 03.09.2007
(51) Int. Cl.: H04H 60/27

(54) **Image device and method for providing timeshift function**

(30) Priority: 22.12.2006 KR 20060133151
(71) Applicant: SAMSUNG ELECTRONICS CO., LTD., Suwon-City, Kyungki-do (KR)
(72) Inventor: RYU, So-hyun, , Gyeonggi-do (KR)
(74) Representative: Clark, Charles Robert

(57) **Abstract**

An image device for and a method of providing a timeshift function are provided. The image device includes a broadcast receiving unit which receives a first broadcast being displayed, and a second broadcast which is different from the first broadcast being displayed; a storage unit which temporarily stores the second broadcast to provide timeshift; and a control unit which controls the broadcast receiving unit to receive the second broadcast and controls the storage unit to temporarily store the second broadcast to provide the timeshift, thereby providing the convenience to a user.

## Description

Apparatuses and methods consistent with the present invention relate to an image device and to a method of providing a timeshift function.

A timeshift function is used to display a broadcast prior to the present broadcast (i.e., a previous broadcast) on, for example, a screen. That is, a user can view or listen to the previous broadcast at a more convenient time by using the timeshift function.

To provide the timeshift function, an image device needs to store a quantity of a previous broadcast. The image device capable of providing the timeshift function has a storage medium to store the quantity of the previous broadcast.

Since the timeshift function is used to display the previous broadcast relative to the present broadcast being displayed, the previous broadcast should be the broadcast which has been previously displayed. However, when a user changes a channel of broadcast which he or she views or listens to, since a broadcast is received through the changed channel, the timeshift function is not applied to the previous broadcast of the changed channel.

When a user desires to view or listen to another broadcasting program which is broadcast at the same time as the present broadcasting program which the user is viewing or listening to, there is a problem in that the user has to stop viewing or listening to the present broadcasting program in order to view or listen to the other broadcasting program. Further, when the user changes a channel in order to view or listen to the other broadcasting program after finishing viewing or listening to the present broadcasting program, there is also the problem in that the user views or listens to only a part of the other broadcasting program.

Moreover, to view or listen to the complete broadcasting program, a user has the inconvenience of separately recording the desired broadcasting program.

Exemplary embodiments of the present invention aim to overcome the above disadvantages and other disadvantages not described above. In addition, the present invention is not required to overcome the disadvantages described above, and an exemplary embodiment of the present invention may not overcome any of the problems described above.

An aspect of the present invention aims to provide an image device which provides a timeshift function, which, when a broadcast set as a desired program is different from an image which is being displayed at present, the image device receives the broadcast set as the desired program to be stored, and, when a display instruction of the broadcast set as the desired program is input, displays the present broadcast and a previous broadcast, and a method thereof.

The above and other aspects of the present invention are realized by providing an image device of providing a timeshift function, comprising: a broadcast receiving unit which receives a broadcast different from an image being displayed at present; a storage unit which temporarily stores the broadcast received by the broadcast receiving unit, to provide timeshift; and a control unit which controls the broadcast receiving unit to receive a broadcast, and to control the storage unit to temporarily store the received broadcast, to provide the timeshift.

When a display instruction of the broadcast is input before receiving of the broadcast is complete, the control unit may control such that the receive present broadcast is displayed, and when a timeshift instruction of the broadcast is input, the control unit may control such that previous broadcast stored in the storage unit is displayed.

When the display instruction of the broadcast is not input until the broadcast ends, the control unit may delete the broadcast stored in the storage unit.

When the display instruction of the broadcast is not input for a specific time after the broadcast ends, the control unit may delete the broadcast stored in the storage unit.

The broadcast receiving unit may comprise: a first tuner which receives the displayed image, and a second tuner which receives the broadcast different from the displayed image.

When the second tuner receives the other broadcast than the broadcast before the broadcast starts, the control unit may generate information that the broadcast will start and control the information to be displayed.

The image device may further comprise: an image providing unit for providing the displayed image.

In accordance with another aspect of the present invention, there is provided a method of controlling an image device, comprising: receiving broadcast which is different from an image which is being displayed; and temporarily storing the received broadcast, to provide timeshift.

The method may further comprise: displaying a received present broadcast when a display instruction of the broadcast is input before receiving of the broadcast is complete; and displaying stored previous broadcast when a timeshift instruction of the broadcast is input.

The method may further comprise: deleting the stored broadcast when the display instruction of the broadcast is not input until the broadcast ends.

The method may further comprise: deleting the stored broadcast when the display instruction of the broadcast is not input for a specific time after the broadcast ends.

The receiving the broadcast may comprise: receiving the displayed image, through a first tuner; and receiving the different broadcast from the displayed image, through a second tuner.

The method may further comprise: generating information that the broadcast will start and displaying the information when the second tuner receives the other broadcast than the broadcast before the broadcast starts.

The method may further comprise: providing the display image.

Embodiments of the present invention are now described by way of example and with reference to the accompanying drawings, in which:
Figure 1 is a block diagram of an image device according to an exemplary embodiment of the present invention;
Figure 2 is a flow chart for explaining a method of storing a broadcasting program as a desired program and applying a timeshift function to the stored desired program, according to an exemplary embodiment of the present invention;
Figure 3 is a block diagram of an image device according to another exemplary embodiment of the present invention; and
Figure 4 is a flow chart for explaining a method of receiving and storing a desired program to apply a timeshift function, according to another exemplary embodiment of the present invention.

Hereinafter, exemplary embodiments of the present invention will be described with reference to accompanying drawings in detail.

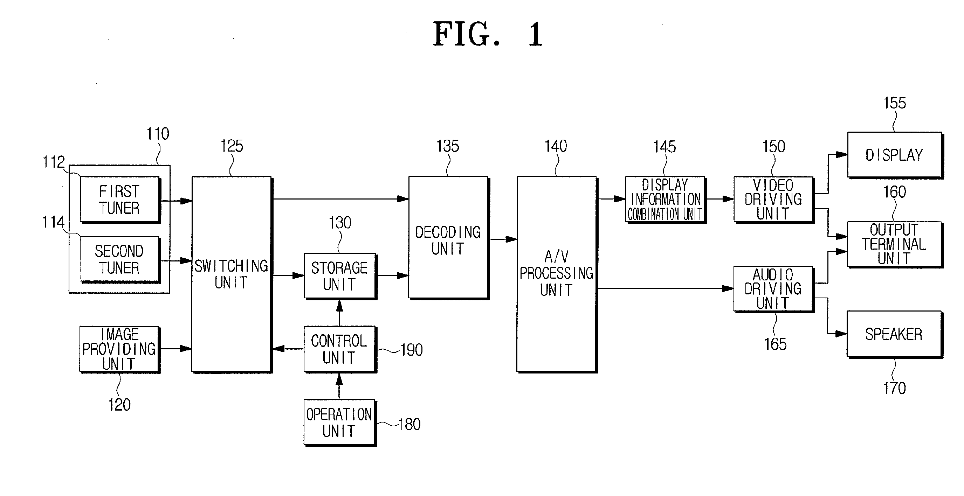

Figure 1 is a block diagram of an image device according to an exemplary embodiment of the present invention. As illustrated in Figure 1, the image device comprises: a broadcast receiving unit 110, an image providing unit 120, a switching unit 125, a storage unit 130, a decoding unit 135, an A/V processing unit 140, a display information combination unit 145, a video driving unit 150, a display 155, an output terminal unit 160, an audio driving unit 165, a speaker 170, an operation unit 180, and a control unit 190.

The broadcast receiving unit 110 receives a broadcast from a broadcasting station or through a satellite service by cable or wireless. Specifically, the broadcast receiving unit 110 may include a multi-tuner with a first tuner 112 and a second tuner 114 for receiving the broadcast.

The image providing unit 120 may be realized as various recording media, such as a hard disk drive (HDD), flash memory, and the like, which store an image and output the stored image. The image providing unit 120 may be further realized by a communication interface which connects to an external device to communicate with each other.

The switching unit 125 performs a switching operation to transfer all or a part of outputs from the broadcast receiving unit 110 and the image providing unit 120 to the A/V processing unit 140 or the storage unit 130. The switching operation of the switching unit 125 is controlled by the control unit 190.

For example, while applying an image from the image providing unit 120 to the decoding unit 135, the switching unit 125 is also capable of applying the broadcast output from the broadcast receiving unit 110 to the storage unit 130. Further, the switching unit 125 is capable of applying the broadcast received by the first tuner 112 in the broadcast receiving unit 110 to the decoding unit 135 and the broadcast received by the second tuner 114 to the storage unit 130.

The storage unit 130 temporarily stores the broadcast output from the switching unit 125, and the decoding unit 135 decodes a compressed image among the images output from the switching unit 125 and applies the image to the A/V processing unit 140.

The A/V processing unit 140 performs signal processing so that the broadcast or image transferred through the decoding unit 135 is reproducible. The A/V processing unit 140 transfers a video signal to the display information combination unit 145 and an audio signal to the audio driving unit 165.

The display information combination unit 145 processes the combination of output information, such as characters, symbols, figures, graphics and the like, with the video signal which is output from the A/V processing unit 140. Then, the display information combination unit 145 may perform the output information combination processing by using the on screen display (OSD) method. The combination processing operation of the display information combination unit 145 is controlled by the control unit 190.

The video driving unit 150 outputs the video signal applied by the display information combination unit 145 to the display 155 or transmits the video signal to another external device (not shown) connected through an output terminal. The audio driving unit 165 outputs the audio signal, which is output from the A/V processing unit 140, through the speaker 170 or transmits the audio signal to another external device (not shown) connected through the output terminal unit 160.

The operation unit 180 is a device which receives an operation instruction input by a user and transfers the operation instruction to the control unit 190. The operation unit 180 may be integrated with or separated from the image device. Further, the operation unit 180 may be realized by a remote controller which inputs the operation instruction of the user and a light receiving unit which receives an output signal of the remote controller and transfers the output signal to the control unit 190. Further, the operation unit 180 may be realized by a user interface capable of inputting the user instruction through a menu screen.

The control unit 190 controls the operation of the image device, according to the operation instruction of a user, which is input through the operation unit 180.

Specifically, the control unit 190 determines a point of time at which a broadcasting program set as a desired program by a user (hereinafter, referred to as the "desired program") starts and determines whether the tuner, for receiving the desired program, exists before the desired program starts. When the tuner does not exist, the control unit 190 controls the display information combination unit 145 and the display 155 to generate information to notify in advance that the desired program will start and to display the information.

However, when the tuner for receiving the desired program exists, the control unit 190 controls the tuner to receive the desired broadcasting program and temporarily stores the received broadcasting program in the storage unit 130. When a user inputs a display instruction of the desired program, the control unit 190 performs a control operation such that the present desired program, which is received, is displayed.

Further, when a user inputs a timeshift instruction to display the previous desired program, the control unit 190 controls blocks of the image device to read the previous desired program, which is temporarily stored in the storage unit 130, to be displayed.

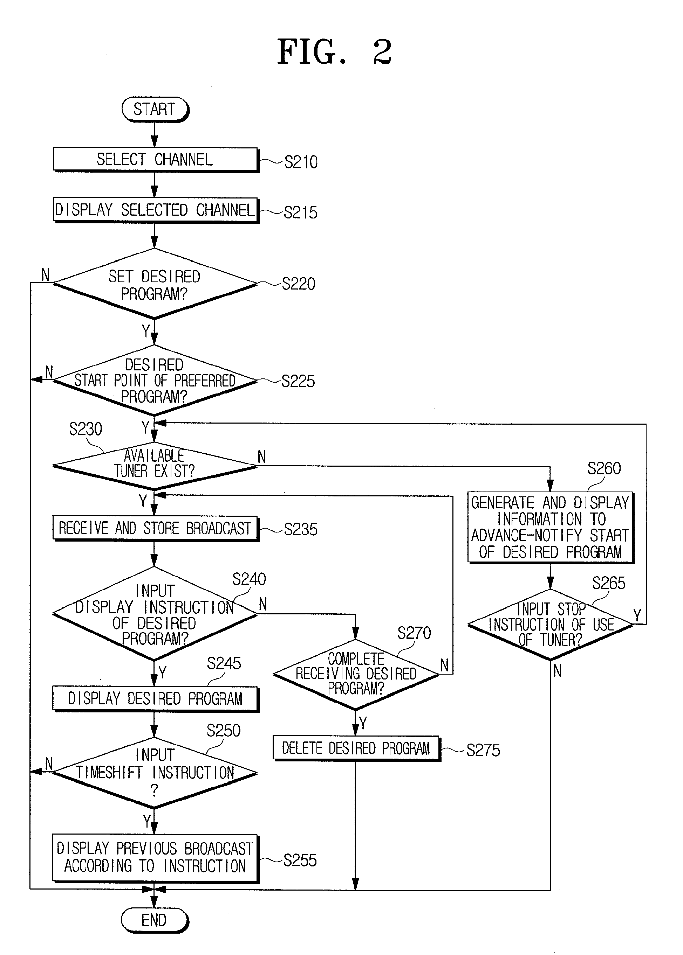

A method of applying timeshift of the desired program will be described, in more detail, with reference to Figure 2. Figure 2 is a flow chart for explaining the method of storing the broadcasting program as the desired program and applying the timeshift function of the stored desired program, according to an exemplary embodiment of the present invention.

As illustrated in Figure 2, a user selects a channel to be viewed or listened (S210). Specifically, the user selects the channel by using a button included in the operation unit 180 or selects the channel by using a menu screen. For clarity, it is assumed that the user selects channel seven.

Then, the control unit 190 performs a control operation such that the broadcast received through the selected channel is displayed (S215). Specifically, in operation S215, the first tuner 112 in the broadcast receiving unit 110 receives the broadcast through the channel selected by the user, that is, through channel seven. The received broadcast is applied to the decoding unit 135 through the switching unit 125, and the broadcast applied to the decoding unit 135 is decompressed. The video signal of the broadcast is signal-processed in the A/V processing unit 140, to be displayed through the video driving unit 150 and the display 155. The audio signal is signal-processed in the A/V processing unit 140, to be output through the audio driving unit 165 and the speaker 170.

The control unit 190 determines whether the desired program is set (S220). The desired program means a program which the user desires to view or listen to. The user sets the desired program by using a program, such as an electronic program guide.

When it is determined that the desired program is set (S220-Y), the control unit 190 determines whether a start point of the desired program occurs (S225).

On the assumption that the user sets the broadcast for one hour, which starts, for example, at 10 o'clock on channel nine, as the desired program, the control unit 190 determines that the start point of the desired program occurs five minutes before the start point of the desired program.

When it is determined that the start point of the desired program occurs (S225-Y), the control unit 190 determines whether an available tuner exists (S230). For example, when it is determined that no broadcast is received through the second tuner 114 while the broadcast of channel 7 is received through the first tuner 112, the control unit 190 considers the second tuner 114 as the available tuner and determines that the available tuner exists. However, when it is determined that the second tuner 114 receives the broadcast for PIP (picture in picture), the control unit 190 determines that no available tuner exists.

When it is determined that the available tuner exists (S230-Y), the control unit 190 controls the available tuner to receive the broadcasting program which is set as the desired program and controls the storage unit 130 to temporarily store the received desired program (S235). That is, at 10 o'clock, the control unit 190 controls the second tuner 114 to receive the broadcast on channel nine. The received broadcast is temporarily stored in the storage unit 130.

While the desired program is received, the control unit 190 determines whether the display instruction of the desired program is input (S240). Viewing or listening to channel seven, the user may input an instruction of changing the channel to nine before 11 o'clock, that is, before the receiving of the desired program is completed, through the operation unit 180. Then, the control unit 190 determines that the display input of the desired program is input.

When it is determined that the display instruction of the desired program is input (S240-Y), the control unit 190 controls the blocks of the image device to display the desired program (S245). Specifically, the displayed desired program is the present desired program received through the second tuner.

Further, the control unit 190 determines whether a timeshift instruction is input (S250). Since the broadcast which the user views or listens to, at the point of time of changing to channel nine, is the present desired program, the user views or listens the desired program from some part after the start point. Therefore, when the user desires to view or listen to the beginning of the desired program or a desired screen of the desired program, the user may input the timeshift instruction included in the operation unit 180.

When the timeshift instruction is input (S250-Y), the control unit 190 controls the storage unit 130 and the A/V processing unit 140 such that the previous desired program is displayed according to the instruction. Specifically, when the user desires to view or listen from the beginning of the desired program, the control unit 190 does not display the present broadcast but it reads the previous desired program which is temporarily stored in the storage unit 130, to be displayed.

In operation S230, when it is determined that the available tuner does not exist (S230-N), that is, when it is determined that the second tuner 114 is in use, the control unit 190 generates information to notify in advance that the desired program will start and displays the information (S260). That is, when it is determined that the second tuner 114 is in use, the control unit 190 generates the advance information that "the desired program of channel 9 will start at 10 o'clock", controls the display information combination unit 145 to perform the combination processing of the advance information and the present displayed broadcast, and controls the display 155 to display the broadcast processed to be combined with the notice information.

When the information to notify in advance that the desired program will start is displayed, the control unit 190 determines whether a stop instruction of using the second tuner 114 is input (S265). When the user sees the displayed information to notify in advance that the desired program will start, the user can stop using the second tuner 114 to store the desired program. However, when the second tuner 114 is continuously in use, the desired program cannot be stored.

Further, in operation S240, when it is determined that the display instruction of the desired program is not input (S240-N), the control unit 190 determines whether the receiving of the desired program is completed (S270).

When it is determined that the receiving of the desired program is completed while the display instruction of the desired program is not input (S270-Y), the control unit 190 deletes the temporarily stored desired program from the storage unit 130 (S275). When the desired program is not displayed and the receiving of the desired program is completed, the temporarily stored desired program is deleted, thereby securing a storage space for temporarily storing another desired program.

When the desired program is not displayed and the receiving of the broadcast is completed, the desired program is deleted from the storage unit 130 but it is not limited thereto. When any specific instruction to view or listen to the stored desired program is not input for a specific time after the receiving of the broadcast set as the desired program is completed, the desired program may be deleted in the storage unit 130.

Further, the stored program may be deleted based on the storage capacity of the storage unit 130. For example, when the volume of the broadcast stored in the storage unit is more than the storage capacity of the storage unit 130, the earliest stored desired program, among the stored broadcast, can be deleted by program units.

In Figure 2, one desired program is set but the present invention is not limited thereto. Therefore, two or more desired programs may be set. When the two ore more desired programs are broadcasted at the same time and the number of the available tuners is same as the number of the set desired programs, there is no problem. However, when the number of the desired programs is greater than the number of the available tuners, the desired program which earlier starts may be stored.

Further, Figure 2 illustrates the method of storing the broadcast set as the desired program while one broadcast is viewed or listened to but the present invention is not limited thereto. That is, when the broadcast set as the desired program starts while the image input through the image providing unit 120 is displayed, the broadcast set as the desired program can be stored.

The image device illustrated in Figure 1 pertains to an exemplary embodiment. Therefore, the image device to which the present invention is applied does not need to include all blocks illustrated in Figure 1 and a unnecessary block may be skipped. For example, when the image device is a set-top box, the display 155 and the speaker 170 can be skipped.

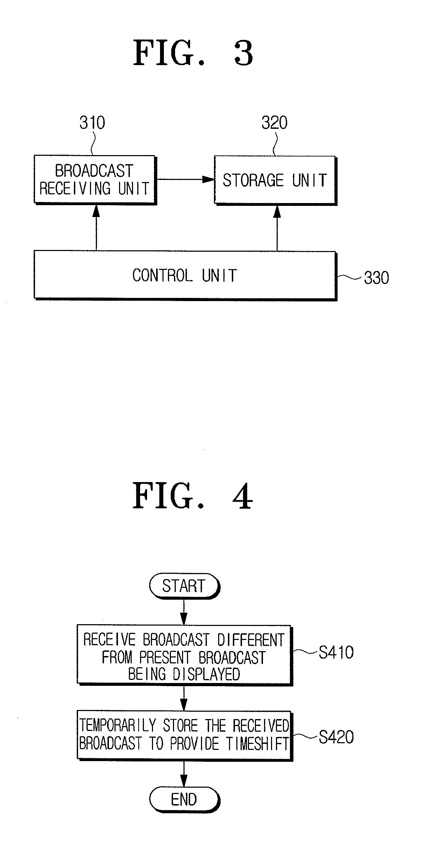

Other exemplary embodiments of the present invention will be described, in detail, with reference to Figures 3 and 4.

As illustrated in Figure 3, an image device according to another exemplary embodiment of the present invention comprises: a broadcast receiving unit 310, a storage unit 320 and a control unit 330. The broadcast receiving unit 310 receives other different broadcast from an image being displayed. The storage unit 320 temporarily stores the broadcast received by the broadcast receiving unit 310. The control unit 330 controls the broadcast receiving unit 310 to receive broadcast and controls the storage unit 330 to temporarily store the received broadcast to provide timeshift.

In accordance with a method of receiving a broadcast as illustrated in Figure 4, the control unit 330 controls the broadcast receiving unit 310 to receive the other broadcast different from the displayed image (S410) and temporarily stores the received broadcast in the storage unit 320 to provide the timeshift (S420).

When a user changes a channel to view or listen to a desired program while the desired program is being broadcasted, the user can view or listen to not only the present broadcast but also the previous broadcast.

According to exemplary embodiment of the present invention, when the broadcast set as the desired program is different from the displayed image, the broadcast set as the desired program is received and temporarily stored and, when the display instruction of the broadcast set as the desired program is input, not only the present broadcast but also the previous broadcast are displayed, thereby providing more convenience to the user.

The foregoing embodiments are merely exemplary and should not be construed as being limited to the present invention. The present teaching can be readily applied to other types of apparatuses. In addition, the description of the exemplary embodiments of the present invention is intended to be illustrative and many alternatives, modifications, and variations will be apparent to those skilled in the art.

## Claims

1. An image device comprising:
a broadcast receiving unit arranged to receive a second broadcast which is different from a first broadcast being displayed;
a storage unit arranged to temporarily store the second; and
a control unit arranged to control the broadcast receiving unit to receive the second broadcast and to control the storage unit to temporarily store the received broadcast for viewing at a later time.

2. The image device of claim 1, wherein,
if a display instruction for displaying the second broadcast is input before receiving of the second broadcast is complete, the control unit is arranged to control the image device so that the second broadcast is displayed, and
if a timeshift instruction for displaying the second broadcast is input, the control unit is arranged to control the image device so that the stored second broadcast is displayed.

3. The image device of claim 1 or 2, wherein the control unit is arranged to delete the stored second broadcast if the display instruction of the second broadcast is input after the second broadcast ends.

4. The image device of claim 1, 2 or 3, wherein the control unit is arranged to delete the stored second broadcast if a display instruction for the second broadcast is input a specific time after the second broadcast ends.

5. The image device of any preceding claim, wherein the broadcast receiving unit comprises:
a first tuner arranged to receive the first broadcast; and
a second tuner arranged to receive the second broadcast.

6. The image device of claim 5, wherein, if the second tuner receives another broadcast than the second broadcast before the second broadcast starts, the control unit is arranged to generate displayable information for indicating that the second broadcast will start and to control the information.

7. The image device of 1 further comprising:
means for displaying an image.

8. A method of controlling an image device, the method comprising:
receiving a second broadcast which is different from a first broadcast being displayed; and
temporarily storing the second broadcast.

9. The method of claim 8 further comprising:
displaying the second broadcast if a display instruction for displaying the second broadcast is input before the receiving of the second broadcast is complete; and
displaying the stored second broadcast if a timeshift instruction for displaying the second broadcast is input to the device.

10. The method of claim 8 or 9, further comprising:
deleting the stored second broadcast if a display instruction for displaying the second broadcast is input after the second broadcast ends.

11. The method of claim 8, 9 or 10, further comprising:
deleting the stored second broadcast if a display instruction for displaying the second broadcast is input a specific time after the second broadcast ends.

12. The method of any of claims 8 to 11 wherein the receiving the second broadcast comprises:
receiving the first broadcast, through a first tuner; and
receiving the second broadcast through a second tuner.

13. The method of any of claims 8 to 12 further comprising:
generating information indicating that the second broadcast will start and displaying the information if the second tuner receives any broadcast other than the second broadcast before the second broadcast starts.

14. The method of claim 8, further comprising providing a displayable image and displaying the image.
